# EUROPEAN PATENT APPLICATION

(11) **EP 3 557 519 A1**
(43) Date of publication of application: **23.10.2019**
(21) Application number: 17859367.9
(22) Date of filing: 30.10.2017
(51) Int. Cl.: G06Q 50/22, G06Q 50/00, G06Q 30/06, G06Q 50/10

(54) **METHOD FOR DONATING CONTENT AND PURCHASING DONATED CONTENT, USING SOCIAL NETWORK SERVICE**

(30) Priority: 20.01.2017 KR 20170009964
(71) Applicant: Forc&C Co., Ltd., Seoul 07532 (KR)
(72) Inventor: LEE, Jin Hyuk, Seoul 07532 (KR); KOO, Yoon Hee, Seoul 07997 (KR)
(74) Representative: HGF Europe LLP
(86) International application number: PCT/KR2017/012044
(87) International publication number: WO 2018/135729

(57) **Abstract**

A method for donating a content and purchasing a donated content using a social network service is provided. The donation and purchasing method includes the steps of: receiving, by a server, content information from a first user terminal; verifying, by the server, validity of the received content information; and, when the validity of the content information is verified, storing, by the server, the content information. According to the content donation and donated content purchasing method using the social network service, normally produced contents are potentially and continuously donated, and a donor expands donees by directly selecting or discovering donees. In addition, a shared existing content is easily donated through a simple change process of making it easy to donate, and a purchaser becomes a donor by selecting a purchase amount of money and purchasing content information.

## Description

### Technical Field

The present disclosure relates to a method for donating a content and buying a donated content using a social network service, and more particularly, to an online donation method which introduces a donation concept rather than simply sharing a content, in an online service for establishing a relational network among people who share a specific interest or activity, and a method for purchasing and selling a donated content.

### Background Art

Although the standard of living has increased with the economic development, many people suffer from economic difficulties due to various problems including the widening gap between the rich and the poor. To help those people, various social welfare organizations and charities which provide welfare services are performing various activities such as fund-raising campaigns and donations.

Typically, these organizations are run mostly depending on foundations', corporations', or personal donations, and thus may have difficulty in being run stably and systematically if there is no donation. In Korea, a culture of donation is less developed than the other advanced countries, and thus donations are not vigorously made. Accordingly, benefits from donations are not effectively delivered to less fortunate neighbors, and also, promotions resulting from donations and support are marginal. Therefore, many people do not even know how to donate and support if they are not especially interested in donations and support.

Related-art donation methods are performed through mass media, a collection box installed at a specific place, or various events. However, these fund-raising methods may not have a great ripple effect of fund-raising campaigns due to inconvenience of users having to move to a specific place, and even if a donation is made, it would be merely a one-time donation and would not lead to continuous interests and donations.

Therefore, there is a need for a method for donating, which can be aggressively exposed to potential donors and can induce people to donate with small money without burdens, and it may be that social network services (SNS) which are rapidly developing in recent years are one alternative. In addition, since one donated content can be purchased regardless of number of times of donating and time, it may be that donations via social network services have unlimited and potential values.

Currently, social network services are being used by about two billion people, and most people using smart devices have at least one social network service account and spend much time using social network services. If donation methods are suggested via social network services, it seems that they may contribute to encouragement of donations. However, related-art social network services are used simply for the purpose of sharing contents.

### Disclosure

### Technical Problem

The present disclosure has been developed in order to address the above-discussed deficiencies of the prior art, and an object of the present disclosure is to provide a method for donating a content and purchasing a donated content using a mutual donation type social network service. According to the method of the present disclosure, a content can be donated while being shared using a social network service, and, when the donated content is purchased, a purchase amount is transmitted to a donee. In addition, according to the method of the present disclosure, a shared existing content can be also donated through a simple change process of making it easy to donate. In addition, according to the method of the present disclosure, a purchaser of a content can become a donor by selecting a specific amount of money.

### Technical Solution

According to an embodiment of the present disclosure to achieve the above-described object, a method for donating a content and purchasing a donated content using a social network service includes the steps of: receiving, by a server, content information from a first user terminal; verifying, by the server, validity of the received content information; and, when the validity of the content information is verified, storing, by the server, the content information.

Herein, the step of receiving may include, when donation target information is matched with the content information by the donor terminal, receiving, by the server, the content information matched with the donation target information.

In addition, the step of receiving may include the steps of: receiving, by the first user terminal from the server, list information of donees to which a user intends to donate; selecting, by the first user terminal, a donee to which the user intends to donate based on the received list information, and generating donation target information; matching, by the first user terminal, the generated donation target information with the content information; and receiving, by the server, the content information matched with the donation target information.

In addition, the method may further include the steps of: transmitting, by the server, the received content information and price information of the content information to a second user terminal; and, when purchasing of the content information is determined via the second user terminal, generating, by the server, payment information including an amount of money for purchasing. The price information may include two or more price samples such that a price of the content information is determined by the second user terminal, and the step of generating the payment information may include selecting one of the price samples via the second user terminal, and generating the payment information regarding the content information by paying an amount of money corresponding to the selected sample.

In addition, the step of generating the payment information may include generating payment information including information regarding an amount of money corresponding to a predetermined ratio, such that the predetermined ratio of the amount of money corresponding to the selected sample is transmitted to a user who donates the content information.

In addition, the step of receiving may include, when the first user terminal sets a time to transmit the content information matched with the donation target information to the server, determining, by the server, whether the set time comes in, and, when it is determined that the set time comes in, receiving the content information matched with the donation target information, and, before the server determines that the set time comes in, posting, by the first user terminal, the content information, and canceling the transmission of the content information matched with the donation target information or correcting the donation target information.

In addition, the step of receiving may include receiving, by the server, the content information matched with the donation target information and simultaneous donation amount information, and the simultaneous donation amount information may be information regarding an amount of money donated by the first user terminal along with the content, and may be shared with a user terminal with the content information when the simultaneous donation amount information is matched with the content information.

In addition, the step of generating the donation target information may include selecting a donee based on the list information and generating the donation target information, or generating the donation target information based on a donee directly designated by the first user terminal, and, when the donee is directly designated, updating the list information such that designated donee is included in the list information.

The step of storing may include determining, by the server, whether the donation target information is matched with the content information, and, when it is determined that the donation target information is not matched with the content information, storing the content information in a story feed unit, and, when it is determined that the donation target information is matched with the content information, storing the content information in a donation feed unit.

In addition, the method may further include the steps of: sharing the content information stored in the story feed unit with a third user terminal connected with the first user terminal via a social network service (SNS); and matching donation target information with the shared content information and changing a stored feed, and the step of changing the feed may include the steps of: when the content information stored in the story feed unit is shared, generating, by the third user terminal, request information regarding the shared content information; when the generated request information is transmitted to the server, individually calculating, by the server, a number of times of receiving the request information for each content information, and sharing the calculated number of times of receiving the request information with the first user terminal and the third user terminal; matching, by the first user terminal, donation target information with the content information for which the number of times of receiving the request information is calculated; and, when the content information matched with the donation target information is received by the server, changing, by the server, the stored feed by storing the content information stored in the story feed unit in the donation feed unit.

In addition, the step of changing the feed may include, when the first user terminal agrees to generate donation target information, and the server determines that a number of times of receiving request information regarding first content information is greater than or equal to a predetermined number, matching, by the server, donation target information including a default value with the first content information, and changing the stored feed without a feed change request from the first user terminal.

The step of verifying the validity may include, when the content information is a photo, comparing, by the server, the received content information and a pre-stored image, and, when it is determined that the content information is not the same as the pre-stored image, determining that the validity is verified.

In addition, the step of verifying the validity may include classifying, by the server, the content information into a portrait or a background photo, and, when the content information is a portrait, selecting and extracting a facial region of the portrait, and then comparing the facial region of the portrait and a facial region of a pre-stored person image, and, when it is determined that the faces of the two images are not identical to each other, determining that the validity is verified.

In addition, the method may further include a step of receiving, by the server from a user terminal, donee information including a content for requesting another user to donate to a donee, and, when it is determined that validity of donee information is verified, generating list information including the donee information.

### Advantageous Effects

According to the content donation and donated content purchasing method using the social network service, normally produced contents may be potentially and continuously donated, and a donor may expand donees by directly selecting or discovering donees. In addition, a shared existing content can be easily donated through a simple change process of making it easy to donate, and a purchaser can become a donor by selecting a purchase amount of money and purchasing content information.

### Description of Drawings

FIG. 1 is a block diagram provided to explain a system for donating a content and purchasing a donated content according to an embodiment of the present disclosure;
FIG. 2 is a view provided to explain uploading content information and posting content information for the purpose of sharing in a method for donating a content and purchasing a donated content according to an embodiment of the present disclosure;
FIG. 3 is a view provided to explain an image import icon in the content donation and donated content purchasing method according to an embodiment of the present disclosure;
FIG. 4 is a view provided to explain generating donation target information and detailed information on a donation in the content donation and donated content purchasing method according to an embodiment of the present disclosure;
FIG. 5 is a view provided to explain purchasing content information in the content donation and donated content purchasing method according to an embodiment of the present disclosure;
FIG. 6 is a view provided to explain a feed change in the content donation and donated content purchasing method according to an embodiment of the present disclosure;
FIG. 7 is a view provided to explain a list of users transmitting request information in the content donation and donated content purchasing method according to an embodiment of the present disclosure;
FIG. 8 is a view provided to explain to-be-donated object information in the content donation and donated content purchasing method according to an embodiment of the present disclosure;
FIG. 9 is a flowchart provided to explain a step of donating in the content donation and donated content purchasing method according to an embodiment of the present disclosure;
FIG. 10 is a view provided to explain a step of verifying validity in the content donation and donated content purchasing method according to an embodiment of the present disclosure;
FIG. 11 is a view provided to explain a step of receiving content information in the content donation and donated content purchasing method according to an embodiment of the present disclosure; and
FIG. 12 is a view provided to explain a feed change in the content donation and donated content purchasing method according to an embodiment of the present disclosure.

### Best Mode

Hereinafter, the present disclosure will be described in more detail with reference to the accompanying drawings. Exemplary embodiments introduced hereinafter are provided such that the idea of the present disclosure is fully conveyed to a person skilled in the art. The present disclosure is not limited to embodiments described below and may be specified in other forms.

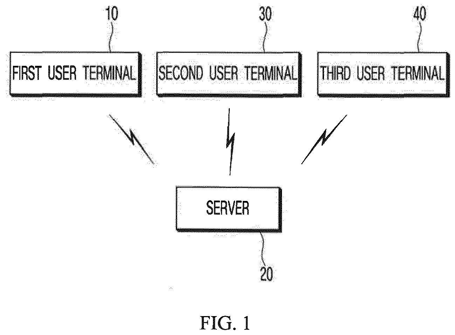

FIG. 1 is a block diagram provided to explain a system for donating a content and purchasing a donated content according to an embodiment of the present disclosure.

The content donation and donated content purchasing system according to an embodiment shares contents by using a social network service, and also, allows contents to be donated. If a donated content is purchased, the system transmits a purchase amount to a donee. In addition, the system is provided to simply change a shared existing content to be easy to be donated.

In addition, through this system, a purchaser may become a donor by directly selecting a purchase amount and purchasing a content, and a content donor may additionally give an extra amount of donation while donating a content.

To achieve this, the content donation system is configured to include a first user terminal 10, a server 20, a second user terminal 30, and a third user terminal 40.

The first user terminal 10 is provided in order for a user to transmit content information to the server 20. The content information refers to a directly photographed picture, a created image or video, a created music source, a created figure, or other design creations, which can be directly transmitted to the server 20.

The user may transmit the content information to the server 200 via the first user terminal 10, and may match donation target information including a to-be-donated object with the content information.

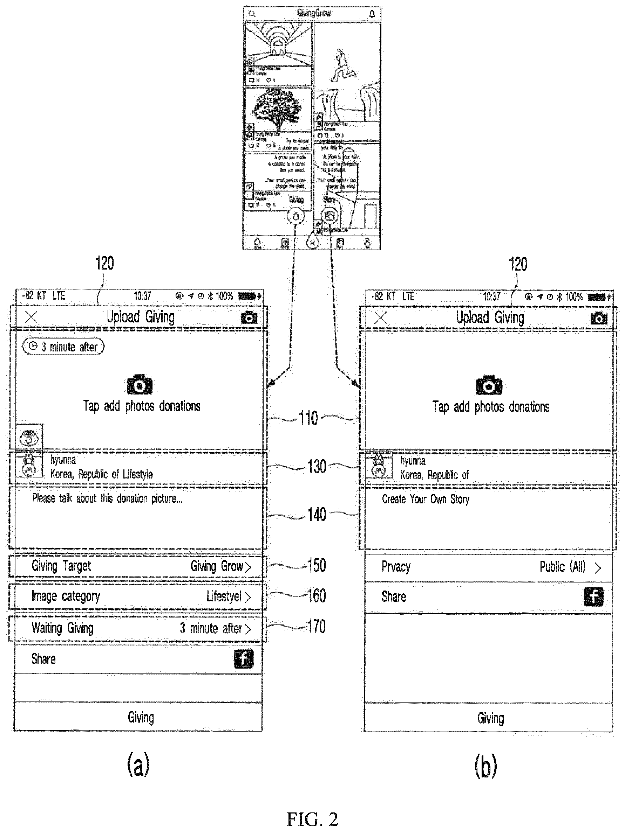

Embodiments of transmitting the content information to the server 20 will be described in detail below with reference to FIGs. 2 to 4.

The server 20 is provided to verify validity of the content information received via the first user terminal 10, and to store the content information the validity of which is verified.

In addition, the server 20 may output the stored content information to a user terminal, and, when the contention information is purchased through the second user terminal 30, the server 20 may generate payment information. The server 20 may donate a corresponding amount of money to a donee matched with the content information.

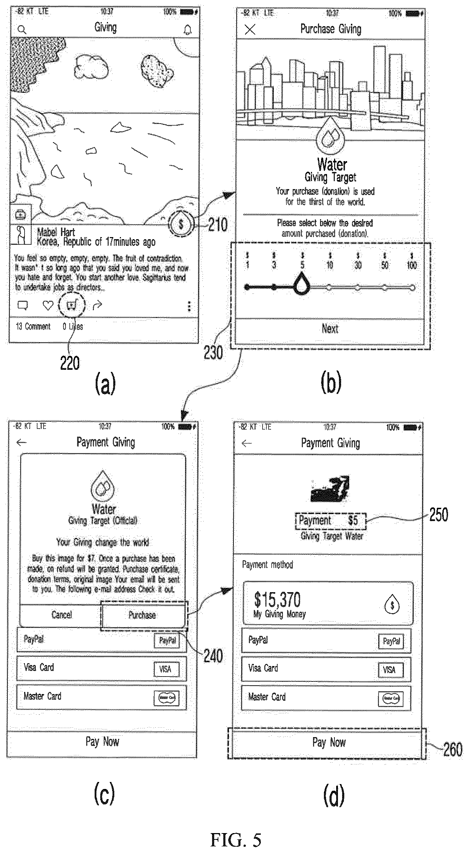

The second user terminal 30 is provided to purchase the content information provided by the first user terminal 10. A purchase amount of money may be donated to a donee by purchasing the content information. This will be described in more detail below with reference to FIG. 5.

The third user terminal 40 is provided to request content information which is transmitted simply for the purpose of sharing to be changed to content information of the purpose of donating.

The server 20 may classify content information received from the first user terminal 10 into content information of the purpose of donating and content information of the purpose of sharing, and the purpose may be selected by the first user terminal 10.

Specifically, the purpose of sharing refers to transmitting content information simply to post the content information as in a social network service, and the purpose of donating refers to transmitting content information to be purchased by the second user terminal 20 and to let a purchase amount of money be donated.

The third user terminal 40 may generate request information for requesting content information posted for the purpose of sharing to be purchased, and may transmit the request information to the server 20.

Then, the server 20 may individually calculate the number of times of receiving the request information for every content information, and allow the calculated number of times of receiving the request information to be shared with the first user terminal 10 and the third user terminal 40.

However, transmitting the request information does not refer to requesting real content information to be changed to content information of the purpose of donating, and refers to making a feed change for changing content information of the purpose of sharing to content information of the purpose of donating only when there is a request from the user who transmitted the corresponding content information via the first user terminal.

That is, the request information is merely a free opinion exchange or expression regarding a donation change among social network service users, and a content information donor merely refers to request information and may make a feed change regardless of request information.

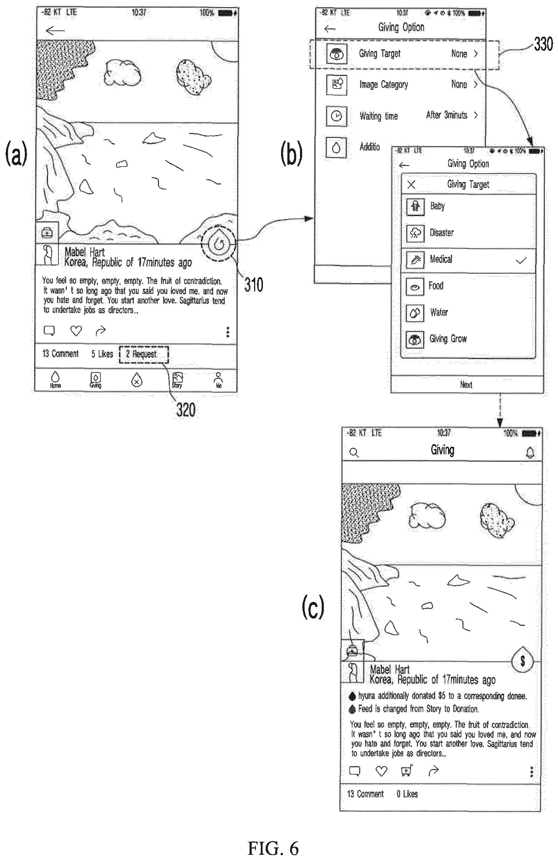

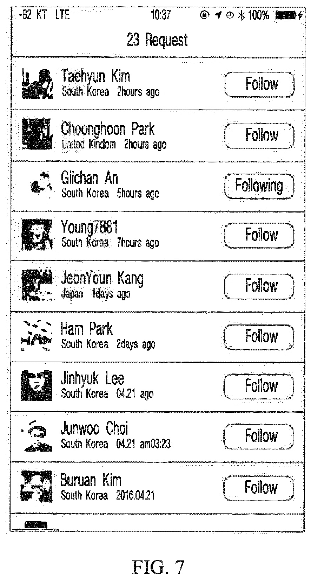

Embodiments of making a feed change will be described in more detail with reference to FIGs. 6 and 7.

The first user terminal 10, the second user terminal 30, and the third user terminal 40 are just distinguished from one another to indicate their respective purposes, and each terminal may be provided as a device that can perform network communication, such as a smart phone, a tablet, etc., and these terms may be interchangeably used.

FIG. 2 is a view provided to explain uploading content information in a method for donating a content and purchasing a donated content according to an embodiment of the present disclosure.

A display region of the first user terminal 10 may include an image import region 110, a feed state display region 120, a user information display region 130, a text information input region 140, a donation target setting region 150, an image category setting region 160, and a donation waiting time setting region 170.

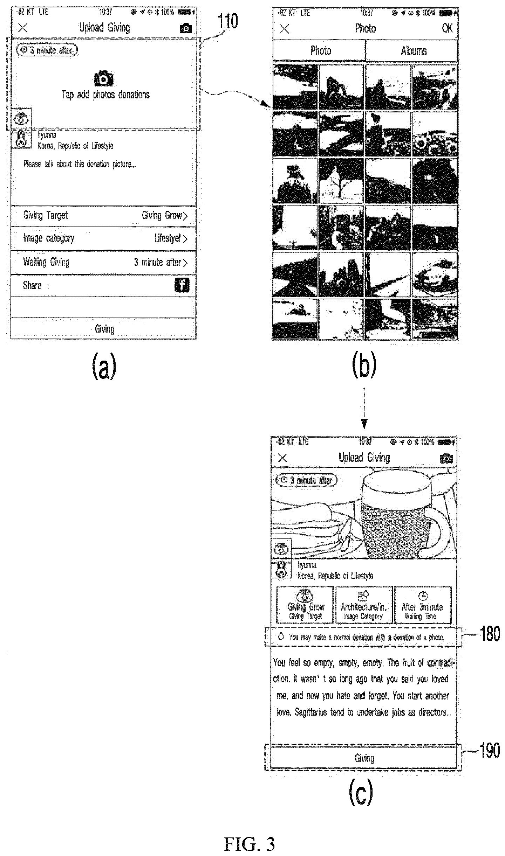

The image import region 110 is provided to import content information stored in the first user terminal 10. This will be described in detail below with reference to FIG. 3.

The feed state display region 120 is provided to identify whether content information to be transmitted has the purpose of donating or the purpose of sharing. The feed state display region 120 may output upload giving as shown in view (a) of FIG. 2, or may output upload story as shown in view (b) of FIG. 2 according to user's selection. In the case of upload giving, content information may be transmitted for the purpose of donating, and, in the case of upload story, content information may be transmitted simply for the purpose of sharing.

In addition, in the case of the purpose of sharing, donation target information including a to-be-donated object does not need to be matched. Therefore, as shown in view (b) of FIG. 2, the display region may not include the donation target setting region 150, the image category setting region 160, and the donation waiting time setting region 170, and is provided to simply transmit content information.

The user information display region 130 is provided to display information of the user who transmits content information, and may output user identification information such as an ID, nationality, etc. The identification information may be transmitted to the server 20 through a process of subscribing, by the user, to a social network service.

The text information input region 140 is provided to allow the user to input text information to be posted along with content information, and the user may input a text to be posted to the text information input region 150 with content information.

The donation target setting region 150 is provided to set a to-be-donated object when the content information is transmitted for the purpose of donating.

The image category setting region 160 is provided to classify an image of content information to be transmitted, and the donation waiting time setting region 170 is provided to set a time to transmit content information to the server 200.

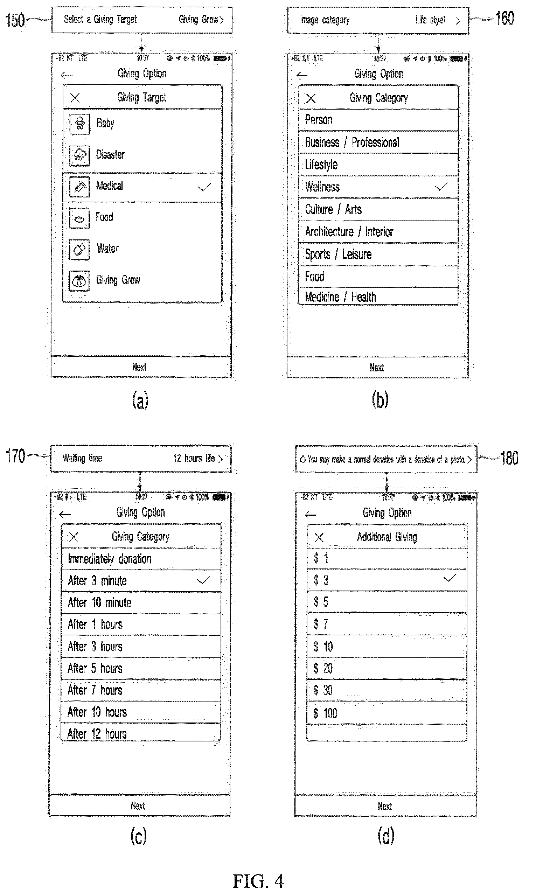

Embodiments of the donation target setting region 150, the image category setting region 160, and the donation waiting time setting region 170 will be described in more detail below with reference to FIG. 4.

FIG. 3 is a view provided to explain the image import region 110 in the content donation and donated content purchasing method according to an embodiment of the present disclosure.

When the user touches the image import region 110, images stored in the first user terminal 10 may be listed as shown in view (b) of FIG. 3. The user may select an image to transmit to the server 20. Of course, the user may directly take a picture by using a camera included in the first user terminal 10, and may transmit the picture.

Meanwhile, when importing an image, setting a donation target, setting an image category, and setting a donation waiting time are completed, the display region of the first user terminal 10 may include a simultaneous donation region 180 and a donation completion region 190 as shown in view (c) of FIG. 3.

The simultaneous donation region 180 is provided to set an amount of money to be donated with transmission of content information. Through this, a content information donor may donate only the content information or may also donate money with the content information.

When an amount of donation is paid through the first user terminal and simultaneous donation amount information including information regarding the amount of donation is matched with the content information with the donation target information, the simultaneous donation amount information is shared with the user terminal with the content information.

Embodiments of the simultaneous donation region 180 will be described in detail below with reference to FIG. 4.

The donation completion region 190 is provided to complete setting necessary for donating, and to transmit the content information to the server 20. When a donation waiting time is set, remaining time may be counted until the donation waiting time passes.

FIG. 4 is a view provided to explain generating donation target information in the content donation and donated content purchasing method according to an embodiment of the present disclosure.

The donation target setting region 150 is provided to set a to-be-donated object when content information is transmitted for the purpose of donating. When the user touches the donation target setting region 150, list information including a plurality of to-be-donated objects is received from the server 20 and is displayed as shown in view (a) of FIG. 4.

The to-be-donated objects may be classified by starvation, disaster, disease, food, water, etc., and more specific to-be-donated objects may be set. To achieve this, the server 20 may receive to-be-donated object information including a content for requesting another user to donate to a donee from a user terminal, and, when it is determined that validity of the to-be-donated object information is verified, the server 20 may generate list information including the to-be-donated object information received from the user terminal.

One to-be-donated object is selected from the displayed list information, such that the first user terminal 10 generates donation target information and matches the generated donation target information with content information.

In another example, donation target information may be generated based on a to-be-donated object directly designated by the first user terminal, in addition to the list information provided by the server 20. When a to-be-donated object is directly designated, the list information is updated to include the designated to-be-donated object.

Accordingly, when another donor donates content information afterward, a to-be-donated object may be selected based on the updated list information.

By doing so, the to-be-donated objects may expand to a story written by a donor, an event, etc., and a user may directly discover a new donation source and set the new donation source as a to-be-donated object, thereby sharing the new to-be-donated object with other users. Since other users may also designate discovered to-be-donated objects and may donate, such expansion of the to-be-donated objects may induce new communication and sharing.

Meanwhile, the image category setting region 160 is provided to classify an image of content information to be transmitted. As shown in view (b) of FIG. 4, a predetermined category list may be displayed and the user may select a category.

As a category of a content is classified, a user of a social network service can search posted content information according to categories, and thus may be provided with convenience. In addition, the classified category may be posted with content information.

The donation waiting time setting region 170 is provided to set a time to transmit content information to the server 20. The user may set the time to transmit content information to the server 20, and, as shown in view (c) of FIG. 4, predetermined times are listed such that the user can select.

For example, when the user selects "After 3 minutes," content information is not transmitted for 3 minutes after the content information is ready for transmission, and the server 20 receives the content information when it is determined that 3 minutes pass. In addition, before determining that the set time comes in, that is, for 3 minutes, the user may cancel transmission of the content information through the first user terminal 10, or may correct the donation target information. However, settings may be made to directly transmit content information without a waiting time.

In this case, content information including information regarding remaining time of the waiting time may be posted on the first user terminal for 3 minutes, such that the content information donor can identify the remaining time.

When the donation waiting time is set, the server 20 may receive the content information but may not transmit the content information to a donation serving region of the server 20. That is, the content information may be posted such that all users can identify, but may be provided to disable purchasing. For example, for 3 minutes, the content information may be posted in the same way as content information of the purpose of sharing, but cannot be purchased, and also, cannot be stored in a wish list. When it is determined that 3 minutes pass, the donation serving region of the server 20 may receive the content information.

By setting the donation waiting time, the content information donor may have time to recheck a copyright of the content information and portrait rights, and to reconsider the same. Therefore, the donor can be prevented from erroneously donating, and also, is allowed to donate at desired time, such that a concept of reservation can be provided.

FIG. 5 is a view provided to explain purchasing content information in the content donation and donated content purchasing method according to an embodiment of the present disclosure.

A display region of the second user terminal 30 may include a purchase request icon 210, a wish list icon 220, an amount setting region 230, a payment request region 240, a payment amount display region 250, and a payment completion region 260.

The purchase request icon 210 is provided in order for a user to purchase posted content information. A step of purchasing content information may procees by touching the purchase request icon 210.

The wish list icon 220 is provided to store content information in case the user purchases in future although the user does not purchase content information at that time. The user may store corresponding content information by touching the wish list icon 220, and may identify a list of stored content information and purchase content information anytime in the future.

When the user touches the above-described purchase request icon 210, the amount setting region 230 may be displayed as shown in view (b) of FIG. 5.

The amount setting region 230 may display a list of price samples such that the user can select one of the price samples and pay a corresponding amount of money. To achieve this, the server 20 may transmit price information to the second user terminal 30.

For example, price information of 1 dollar, 3 dollars, 5 dollars, 10 dollars, 30 dollars, 50 dollars, and 100 dollars may be transmitted from the server 20 and may be displayed. The user may select an amount of money by touching a water drop icon displayed under 5 dollar which is set as default, and dragging in the horizontal direction. In addition, a water drop icon displayed under 100 dollars may have a size larger than that of a water drop icon of 1 dollar.

In addition, when the user clicks a lower end of the amount setting region 230, the payment request region 240 may be displayed as shown in view (c) of FIG. 5.

The payment request region 240 is provided to input card information and to complete the payment. When the user touches the payment request region 240, the payment amount display region 250 and the payment completion region 260 may be displayed as shown in view (d) of FIG. 5.

The payment amount display region 250 is provided to display the amount of money selected on the amount setting region 230, and the payment completion region 260 is provided to complete a final payment.

The user may identify the payment amount outputted on the payment amount display region 250. When the user inputs credit card information and touches the payment completion region 260, the server 20 may verify whether the credit card information is valid, and, when the validity of the credit card is verified, the server 20 may generate payment information including the purchase amount. The paid amount of money may be transmitted to a donee.

Specifically, the content information may be posted along with a photo, an ID, a name or nationality of a donor, a donation time, a donation message, a category, a to-be-donated object, simultaneous donation amount information, etc.

FIG. 6 is a view provided to explain a feed change in the content donation and donated content purchasing method according to an embodiment of the present disclosure, and FIG. 7 is a view provided to explain request information in the content donation and donated content purchasing method according to an embodiment of the present disclosure.

The display region of the first user terminal 10 may include a feed change request icon 310, a request region 320, and a feed change donation target setting region 330.

The feed change request icon 310 is provided to change content information that was transmitted for the purpose of sharing and is not matched with donation target information to content information of the purpose of donating.

The user who transmits corresponding content information via the first user terminal 10 may request a feed change by touching the feed change request icon 310.

The request region 320 is provided to display a counted number of times of receiving request information when request information regarding the corresponding content information is generated by the third user terminal 40 and is transmitted to the server 20.

For example, a user terminal including the third user terminal 40 may output the feed change request icon 310 and the request region 320 as shown in view (a) of FIG. 6, and, when a user who does not transmit corresponding content information touches the feed change request icon 310, request information may be generated by the third user terminal 40 and may be transmitted to the server 20. Then, 2 requests outputted on the request region 320 may be changed to 3 requests.

However, when the user touches the feed change request icon 310 again, the request may be released and 3 requests outputted on the request region 320 may be changed to 2 requests.

In addition, when the user touches the request region 320, identification information of the user who transmits the request information may be outputted on the user terminal as shown in FIG. 7. The calculated number of times of receiving request information regarding the corresponding content information may be outputted on an upper portion.

When the user touches the feed change icon 310 via the first user terminal, the feed change donation target setting region 330 may be outputted as shown in view (b) of FIG. 6.

The feed change donation target setting region 330 is provided to match donation target information with the content information which is requested to make the feed change. Since content information that is posted for the purpose of sharing is not matched with donation target information, a donation target should be matched with the content information to change the purpose of the content information to the purpose of donating, and the content information should be transmitted to the server 20.

The feed change donation target setting region 330 is provided to set a to-be-donated object as in the above-described donation target setting region 150. When the user touches the feed change donation target setting region 330, received list information may be outputted, and the user may select a to-be-donated object and may match donation target information with the content information.

In addition, in the step of making the feed change, a region for setting an image category, a region for setting a donation waiting time, or a region for setting a simultaneous donation amount may be outputted like the donation target setting region 150, the image category setting region 160, and the simultaneous donation region 180.

When the feed change is completed, the contention information may be outputted such that it can be purchased as shown in view (c) of FIG. 6.

Specifically, the server 20 may output content information stored in a story feed unit and content information stored in a donation feed unit to be distinguished from each other. The content information of the story feed unit may be outputted simply to be posted, and the content information of the donation feed unit may be outputted along with a purchasing means such as the purchase request icon 210 and a wish list icon for containing a donated content in a shopping basket.

That is, when a feed change is performed with respect to the content information stored in the story feed unit, the content information may be copied into and stored in the donation feed unit. Therefore, the corresponding content information may be stored in the donation feed unit and then may be outputted, and also, may be stored in the story feed unit as it is and then may be outputted. The content information stored in the story feed unit may be posted without the purchase request icon 210.

In addition, when the feed change is completed, change information may be transmitted to the third user terminal 40 which transmits request information. By doing so, a user who generates request information recognizes a feed change of the corresponding content information, and may be induced to purchase the content information.

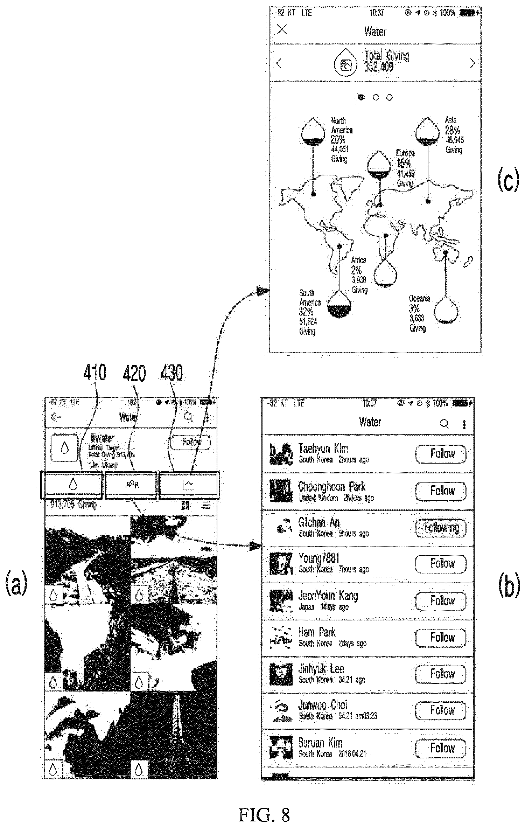

FIG. 8 is a view provided to explain to-be-donated object information in the content donation and donated content purchasing method according to an embodiment of the present disclosure.

A display region of a user terminal including the first user terminal 10, the second user terminal 30, and the third user terminal 40 may include a to-be-donated object image information display region 410, a to-be-donated object information display region 420, and a to-be-donated object statistic information display region 430.

The to-be-donated object image information display region 410 is provided to display content information corresponding to a to-be-donated object. When the user touches the to-be-donated object image information display region 410, content information having the corresponding to-be-donated object matched with donation target information may be outputted as shown in view (a) of FIG. 8.

The to-be-donated object information display region 320 is provided to output identification information of a user who purchases the content information corresponding to the to-be-donated object. When the user touches the to-be-donated object information display region 420, a display region displaying a list of identification information may be outputted as shown in view (b) of FIG. 8.

The to-be-donated object statistic information display region 430 is provided to display statistic data regarding an amount of donation or the number of times of donating for to-be-donated object. When the user touches the to-be-donated object statistic information display region 430, statistic data related to the to-be-donated object may be displayed as shown in view (c) of FIG. 8.

For example, the number of times of donating or an amount of donation, classified by continent, may be outputted, and a proportion according to the number of times of donating or the amount of donation may be outputted. The data may be limited to domestic data, and may be expressed by a graph with time.

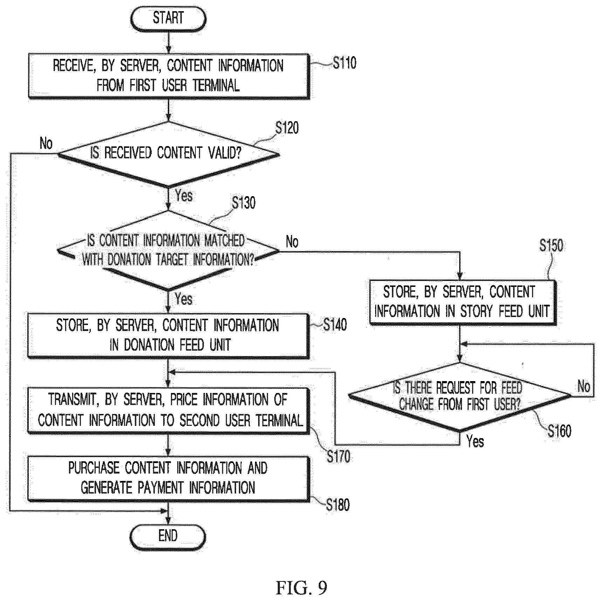

FIG. 9 is a flowchart provided to explain a step of donating in the content donation and donated content purchasing method according to an embodiment of the present disclosure.

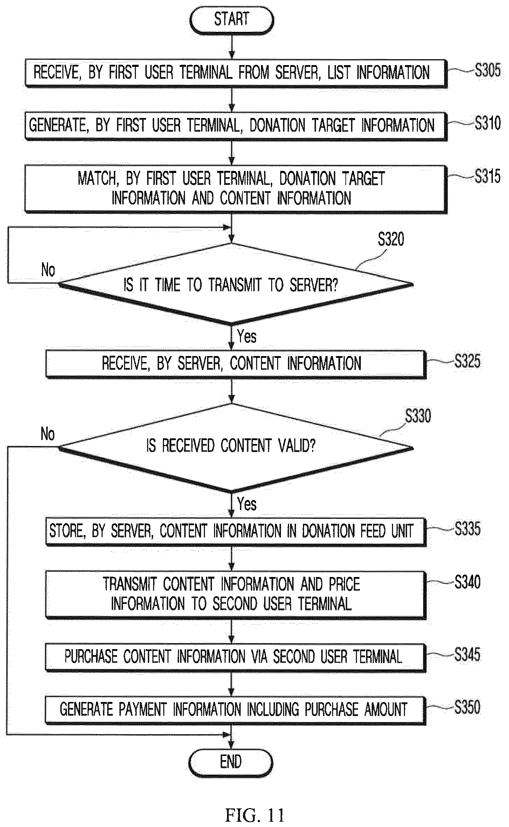

First, the server 20 may receive content information from the first user terminal 10 as described above (S110). The content information may be classified into content information of the purpose of sharing or content information of the purpose of donating. When the content information is received for the purpose of donating, the content information may be matched with donation target information. This will be described in detail below with reference to FIG. 11.

Then, the server 20 may verify whether the received content information is valid or not (S120). Specifically, the process of verifying validity of content information may be verifying whether a video is a reproducible file when the content information is a video file. For example, it may be determined whether a video format conforms to a format of a social network service.

In addition, a copyright of a photo may be determined. In this case, the validity of the content information may be verified by comparing the content information with a pre-stored image.

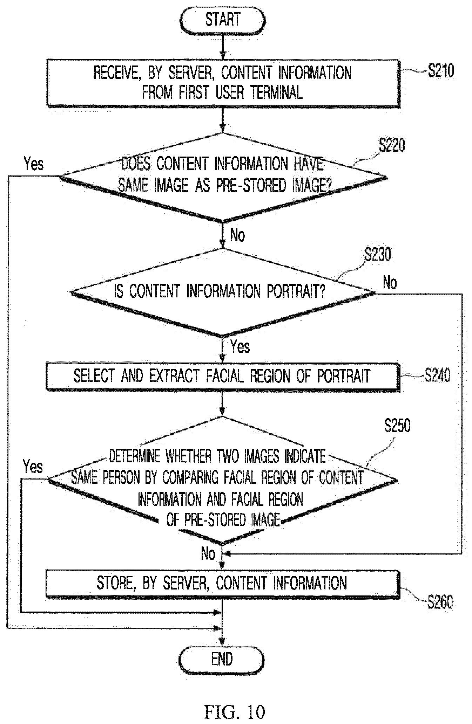

The pre-stored image may include not only an image posted on a social network service, but also an image of a personal blog or website, an image obtained by scanning a magazine website or magazine, a game screen shot, a movie/TV screen shot, a poster, or a book cover. The step of verifying validity regarding the copyright of the content information will be described in detail below with reference to FIG. 10.

When it is determined that the received content information is valid (S120-Yes), the server 20 may determine whether the content information is matched with donation target information (S130).

When it is determined that the content information is matched with the donation target information (S130-Yes), the server 20 may store the content information in the donation feed unit and output the content information to a user terminal such that it can be purchased.

On the other hand, when it is determined that the content information is not matched with the donation target information (S130-No), the server 20 may store the content information in the story feed unit (S150) and may output the content information to the user terminal.

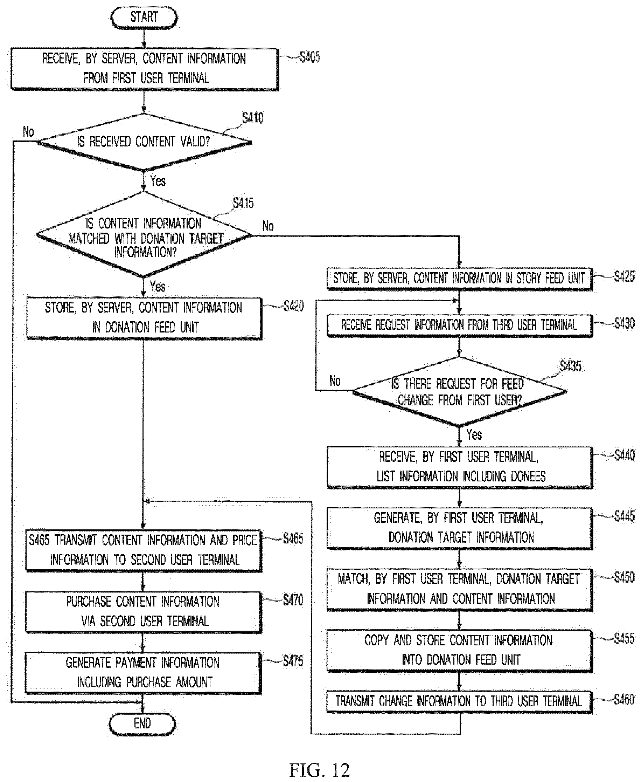

In addition, when there is a request for a feed change from the first user terminal 10 (S160-Yes), the server 20 may match the content information and the donation target information with each other, and may copy and store the content information into the donation feed unit. When there is no request for a feed change (S160-No), the content information is posted simply for the purpose of sharing until there is a request for a feed change. This will be described in detail below with reference to FIG. 12.

When the content information matched with the donation target information is stored in the donation feed unit, the server 20 may transmit price information of the content information to the second user terminal 30 (S170), and, when the user purchases the corresponding content information, the server 20 may generate payment information including a purchase amount (S180).

Through the above-described process, the content donation and donated content purchasing method using a social network service, by which a user donates a photo to be shared and another user purchases the donated photo, is provided.

FIG. 10 is a view provided to explain a step of verifying validity in the content donation and donated content purchasing method according to an embodiment of the present disclosure.

First, when the server 20 receives content information including a photo from the first user terminal 10 as described above (S210), the server 20 may determine whether the content information has the same image as a pre-stored image to verify validity of the content information (S220).

When it is determined that the content information does not have the same image as the pre-stored image (S220-No), it is determined whether the content information is a portrait (S230).

The content information may be roughly classified into a background photo and a portrait, and the server 20 may classify the received content information into the background photo and the portrait. The content information classified by a user terminal may be received from the user terminal.

When it is determined that the content information is not a portrait (S230-No), the server 20 may store the content information in the story feed unit or the donation feed unit, and, when it is determined that the content information is a portrait (S230-Yes), the server 20 may select and extract only a facial region of the portrait (S240), and may determine whether a person included in the portrait is the same person as the person of a pre-stored image by comparing the extracted facial region with a facial region of the pre-stored image (S250).

Specifically, in determining whether the person in the content information is the same as that of the pre-stored image, the server 20 may divide the portrait into a frontal photo and a lateral photo, and may compare the frontal photo with a frontal photo of the pre-stored image and compare the lateral photo with a lateral photo of the pre-stored image.

In addition, a well-known image in people search information of a portal site may be utilized as the facial region of the pre-stored image, and, based on the well-known image, it may be determined whether the portrait of the content information is a face of a celebrity.

In addition, when it is determined that the person in the content information is not the same as the person of the pre-stored image (S250-No), the server 20 may store the content information in the story feed unit or the donation feed unit (S260).

However, when it is determined that the person in the content information is the same as the person of the pre-stored image (S260-Yes), it may be determined that the content information is not valid, but, when the person in the content information corresponds to the face of the user who transmitted the corresponding content information, it may be determined that the content information is valid.

Specifically, the server 20 may receive a face photo for each user and induce the users to subscribe to a social network service, and may include a face database. In this case, the server 20 may verify the copyright of the content based on the face database.

FIG. 11 is a view provided to explain a step of receiving content information in the content donation and donated content purchasing method according to an embodiment of the present disclosure.

First, the server 20 may receive, from a user terminal, donee information including a content for requesting another user to donate to a donee, and may generate list information including the donee information and may transmit the list information to the first user terminal 10.

For example, the user terminal may transmit, to the server 20, donee information including a text or an image of a content for requesting a donation to the Red Cross, and the server 20 may include donee information on the Red Cross in the list information including the plurality of pieces of donee information such as UNICEF, the Kkottongnae welfare facility, etc.

When the first user terminal 10 receives the list information including the donee information, such as the Red Cross, UNICEF, the Kkottongnae welfare facility, etc., so as to transmit content information for the purpose of donating (S305), the user may select the Kkottongnae welfare facility from the list information and the first user terminal 10 may generate donation target information (S310).

When the donation target information is generated, the first user terminal 10 may match the content information with the donation target information (S315), and may determine whether a donation waiting time passes to transmit the content information to the server 20 (S320).

Specifically, the donation waiting time may be set through the donation waiting time setting region 170 as described above.

When the set time passes (S320-Yes), the server 20 may receive the content information matched with the donation target information (S325).

In addition, when the received content is a valid content (S330-Yes), the server 20 may store the content information in the donation feed unit, and may transmit the received content information and price information including two or more price samples to the second user terminal 30 (S340).

Then, the user may determine to purchase the content information through the second user terminal 30 (S345), and the sever 20 may generate payment information including a purchase amount so as to transmit the purchase amount to a donee (S350).

In another example, even a kind of seller specialized to sell a content may use the service. When content information provided by the seller is purchased, only a portion of the amount of sales may be transmitted a donee of the content information. For example, 1 dollar which is 20% of 5 dollars may be transmitted. In addition, the seller may individually set a donee according to each content information to be sold and may sell the content information.

Accordingly, payment information including information on an amount of money corresponding to a predetermined ratio may be generated, such that a predetermined ratio of the amount of money corresponding to a selected sample can be transmitted to the seller. For example, four dollars corresponding to the remaining percentage, 80%, may be transmitted to the seller.

FIG. 12 is a view provided to explain a feed change in the content donation and donated content purchasing method according to an embodiment of the present disclosure.

First, when the server 20 receives content information from the first user terminal 10 as described above (S405), the server 20 may determine whether the received content is a valid content (S410). When the validity of the received content is verified (S410-Yes), the server 20 may determine whether the content information is matched with donation target information (S415).

When the content information is transmitted for the purpose of donating and is matched with the donation target information (S415-Yes), the server 20 may store the content information in the donation feed unit (S420), and may output the content information to a user terminal. On the other hand, when the content information is transmitted for the purpose of sharing and is not matched with the donation target information (S415), the server 20 may store the content information in the story feed unit (S425), and may output the content information to the user terminal simply to be posted.

When a user identifies the content information posted for the purpose of sharing via the third user terminal 40, the third user terminal 40 may generate request information for requesting to change the corresponding content information to content information of the purpose of donating, and the server 20 may receive the generated request information (S430).

Specifically, the user may not redundantly generate request information via the third user terminal 40, and the server 20 may receive request information from a plurality of users.

The user who provides the content information may identify the calculated number of times the request information is generated, and may request the server 20 to make a feed change of the corresponding content information (S435-Yes).

In addition, the transmission of the request information may be canceled. When a request cancel signal is received from the third user terminal 40, the server 20 may reduce the number of times of counting the request information. Accordingly, the user may easily activate or inactivate the request information displayed on the third user terminal like the concept of turning on or off a "Like" button in a normal social network service (SNS).

When there is no request for a feed change (S435-No), the server 20 may receive request information from the third user terminal 40 until there is a request for a feed change from the first user terminal.

On the other hand, when there is a request for a feed change (S435-Yes), the first user terminal 10 may receive list information of donees (S440), and may select a donee and generate donation target information (S445), and may match the generated donation target information with the content information for which the number of times of receiving request information is calculated (S450).

In addition, when the server 20 receives the content information matched with the donation target information, the server 20 may copy and store the content information stored in the story feed unit into the donation feed unit, and finishes the feed change (S455).

Meanwhile, when the first user terminal 10 agrees to generate the donation target information, and the server 20 determines that the number of times of receiving request information regarding first content information is greater than or equal to a predetermined number, the server 20 may change a stored feed by matching donation target information including a default value with the first content information, without receiving a feed change request.

For example, when the number of times of receiving request information is greater than or equal to 100, the server 20 may change the feed by matching donation target information with content information without a feed change request of the first user terminal 10, and, in the process of agreeing to generate donation target information, the server 20 may receive a default value of the donation target information from the first user terminal 10. For example, all content information provided by a user may be set to be donated to UNICEF.

In another example, the server 20 may store second content information for which the first user terminal 10 does not agree to generate donation target information. When the number of times of receiving request information regarding the second content information is greater than or equal to 100, the second content information may be set to automatically change the feed with no agreement on generation of donation target information from the first user terminal 10. In this case, predetermined donation target information may be matched with the second content information by the server 20.

In still another example, when the number of times of receiving request information is 100, 200, or 300, the server 20 may provide a notification and recommendation function to recommend that the feed is changed at intervals of 100 times. The recommendation may be provided at intervals of other number of times.

When the feed change is completed, change information may be transmitted to the third user terminal 40 which generates the request information (S460). For example, a notification informing the completion of the feed change may be outputted to the third user terminal 40. By doing so, the user who generates the request information may be induced to donate by purchasing the content information.

When the change information is transmitted, content information and price information may be transmitted to the second user terminal 30 (S465), such that the user can purchase the corresponding content information.

When the content information is purchased through the second user terminal 30 (S470), payment information including a purchase amount may be generated (S475).

Accordingly, the method for donating and purchasing a donated content using a social network service, by which a user donates a content to be shared and other users contribute to encouragement of donations by purchasing the donated content, is provided.

While preferred embodiments of the present disclosure have been shown and described, it will be understood by those skilled in the art that the present disclosure is not limited to the above-described specific embodiments, and various changes in form and details may be made therein without departing from the spirit and scope of the invention as defined by the appended claims. In addition, the changed embodiments should not be interpreted as being separate from the technical idea or scope of the present disclosure.

## Claims

1. A method for donating a content and purchasing a donated content using a social network service, the method comprising the steps of:
receiving, by a server, content information from a first user terminal;
verifying, by the server, validity of the received content information; and
when the validity of the content information is verified, storing, by the server, the content information.

2. The method of claim 1, wherein the step of receiving comprises, when donation target information is matched with the content information by the donor terminal, receiving, by the server, the content information matched with the donation target information.

3. The method of claim 2, wherein the step of receiving comprises the steps of:
receiving, by the first user terminal from the server, list information of donees to which a user intends to donate;
selecting, by the first user terminal, a donee to which the user intends to donate based on the received list information, and generating donation target information;
matching, by the first user terminal, the generated donation target information with the content information; and
receiving, by the server, the content information matched with the donation target information.

4. The method of claim 3, further comprising the steps of:
transmitting, by the server, the received content information and price information of the content information to a second user terminal; and
when purchasing of the content information is determined via the second user terminal, generating, by the server, payment information comprising an amount of money for purchasing,
wherein the price information comprises two or more price samples such that a price of the content information is determined by the second user terminal, and
wherein the step of generating the payment information comprises selecting one of the price samples via the second user terminal, and generating the payment information regarding the content information by paying an amount of money corresponding to the sclcctcd sample.

5. The method of claim 4, wherein the step of generating the payment information comprises generating payment information comprising information regarding an amount of money corresponding to a predetermined ratio, such that the predetermined ratio of the amount of money corresponding to the selected sample is transmitted to a user who donates the content information.

6. The method of claim 3, wherein the step of receiving comprises, when the first user terminal sets a time to transmit the content information matched with the donation target information to the server, determining, by the server, whether the set time comes in, and, when it is determined that the set time comes in, receiving the content information matched with the donation target information, and, before the server determines that the set time comes in, posting, by the first user terminal, the content information, and canceling the transmission of the content information matched with the donation target information or correcting the donation target information.

7. The method of claim 3, wherein the step of receiving comprises receiving, by the server, the content information matched with the donation target information and simultaneous donation amount information, and
wherein the simultaneous donation amount information is information regarding an amount of money donated by the first user terminal along with the content, and is shared with a user terminal with the content information when the simultaneous donation amount information is matched with the content information.

8. The method of claim 3, wherein the step of generating the donation target information comprises selecting a donee based on the list information and generating the donation target information, or generating the donation target information based on a donee directly designated by the first user terminal, and, when the donee is directly designated, updating the list information such that designated donee is included in the list information.

9. The method of claim 1, wherein the step of storing comprises determining, by the server, whether the donation target information is matched with the content information, and, when it is determined that the donation target information is not matched with the content information, storing the content information in a story feed unit, and, when it is determined that the donation target information is matched with the content information, storing the content information in a donation feed unit.

10. The method of claim 9, further comprising the steps of:
sharing the content information stored in the story feed unit with a third user terminal connected with the first user terminal via a social network service (SNS); and
matching donation target information with the shared content information and changing a stored feed,
wherein the step of changing the feed comprises the steps of:
when the content information stored in the story feed unit is shared, generating, by the third user terminal, request information regarding the shared content information;
when the generated request information is transmitted to the server, individually calculating, by the server, a number of times of receiving the request information for each content information, and sharing the calculated number of times of receiving the request information with the first user terminal and the third user terminal;
matching, by the first user terminal, donation target information with the content information for which the number of times of receiving the request information is calculated; and
when the content information matched with the donation target information is received by the server, changing, by the server, the stored feed by storing the content information stored in the story feed unit in the donation feed unit.

11. The method of claim 10, wherein the step of changing the feed comprises, when the first user terminal agrees to generate donation target information, and the server determines that a number of times of receiving request information regarding first content information is greater than or equal to a predetermined number, matching, by the server, donation target information comprising a default value with the first content information, and changing the stored feed without a feed change request from the first user terminal.

12. The method of claim 1, wherein the step of verifying the validity comprises, when the content information is a photo, comparing, by the server, the received content information and a pre-stored image, and, when it is determined that the content information is not the same as the pre-stored image, determining that the validity is verified.

13. The method of claim 12, wherein the step of verifying the validity comprises classifying, by the server, the content information into a portrait or a background photo, and, when the content information is a portrait, selecting and extracting a facial region of the portrait, and then comparing the facial region of the portrait and a facial region of a pre-stored person image, and, when it is determined that the faces of the two images are not identical to each other, determining that the validity is verified.

14. The method of claim 1, further comprising a step of receiving, by the server from a user terminal, donee information comprising a content for requesting another user to donate to a donee, and, when it is determined that validity of donee information is verified, generating list information comprising the donee information.
